Europäisches Patentamt

European Patent Office

Office européen des brevets

(11) Veröffentlichungsnummer: **0 235 335**
**B1**

(12) **EUROPÄISCHE PATENTSCHRIFT**

(45) Veröffentlichungstag der Patentschrift:
**17.05.89**

(21) Anmeldenummer: **86102865.2**

(22) Anmeldetag: **05.03.86**

(51) Int. Cl.⁴: **G01G 19/413**

(54) **Preisrechnende Waage.**

(43) Veröffentlichungstag der Anmeldung:
**09.09.87 Patentblatt 87/37**

(45) Bekanntmachung des Hinweises auf die Patenterteilung:
**17.05.89 Patentblatt 89/20**

(84) Benannte Vertragsstaaten:
**AT BE CH DE FR GB IT LI LU NL SE**

(56) Entgegenhaltungen:
**EP-A- 0 020 920**
**EP-A- 0 064 341**
**EP-A- 0 081 815**
**EP-A- 0 139 420**
**EP-A- 0 143 668**
**DE-A- 3 345 372**

(73) Patentinhaber: **ESSELTE METO INTERNATIONAL PRODUKTIONS GMBH, Brentanostrasse, D-6932 Hirschhorn/Neckar(DE)**

(72) Erfinder: **Leyde, Justus Manfred, Wiesenbacher Weg 4, D-6901 Mauer(DE)**

(74) Vertreter: **Schwepfinger, Karl-Heinz, Dipl.-Ing. et al, Prinz, Leiser, Bunke & Partner Manzingerweg 7, D-8000 München 60(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf eine preisrechnende Waage gemäß dem Oberbegriff des Patentanspruchs 1.

Eine solche Waage ist aus der DE-A 3 345 372 bekannt. Bei dieser Waage ist es möglich, mittels einer Steuereinrichtung mit Tastatur den Umsatz eines Artikels in Preis- und Gewichtsangaben festzuhalten. Dazu wird die Eingabetastatur so gestaltet, daß zwei Tastengruppen zur Verfügung stehen. Durch entsprechende Betätigung bestimmter Tasten der beiden Gruppen werden jeweils ausgewählte Speicherfelder adressiert, in denen auszugebende Angaben gespeichert sind. Einzelheiten über die dafür und für die Ausgabe weiterer artikelspezifischer Informationen erforderliche Speicherorganisation sind der eingangs genannten Druckschrift jedoch nicht zu entnehmen.

Auch aus der EP-A 0 081 815 ist eine preisrechnende Waage bekannt, bei der der Speicher mehr als zweihundert gleichrangige Speicherplätze hat, in denen insgesamt ebensoviele Grundpreise für zu verkaufende Artikel abgespeichert werden können. Die Speicherplätze sind durchnumeriert, und zum Aufrufen des abgespeicherten Grundpreises muß über das zweite Tastenfeld die Nummer des Speicherplatzes eingegeben werden. Um zu vermeiden, daß bei Speicherplätzen mit einer dreistelligen Nummer drei Tasten betätigt werden müssen, weist das zweite Tastenfeld der bekannten Waage vierundzwanzig, von 0 bis 23 durchnumerierte Tasten auf, wobei eine besondere Speicheraufrufprozedur vorgesehen ist, die es ermöglicht, durch Betätigen von zwei Tasten einen von maximal zweihundertneununddreißig Speicherplätzen aufzurufen. Wenn beispielsweise der am Speicherplatz Nr. 174 abgespeicherte Grundpreis zur Anwendung kommen soll, muß der Speicherplatz Nr. 174 durch Betätigen der "17"-Taste und der "4"-Taste aufgerufen werden. Für die Speicherplätze mit den Nummern 0 bis 23 genügt zum Aufrufen das Drücken einer der Tasten "0" bis "23".

Die einwandfreie Bedienung der aus der vorgenannten EP-A 0 081 815 bekannten Waage setzt voraus, daß die Bedienungsperson genau weiß, an welchem der zweihundertneununddreißig Speicherplätze welcher Grundpreis abgespeichert ist. Dabei werden an die Gedächtnisleistung der Bedienungsperson erhebliche Anforderungen gestellt, wobei in der Praxis in der Regel neben der Waage eine Liste bereitliegt, auf die die Bedienungsperson zurückgreifen kann, um beispielsweise nachzusehen, unter welcher Speicherplatznummer der Grundpreis von beispielsweise DM 16,75 abgespeichert ist. Da bei der bekannten Waage an den Speicherplätzen lediglich Grundpreise abgespeichert sind, was bedeutet, daß beispielsweise für zwei völlig unterschiedliche Artikel, die zufällig den gleichen Grundpreis haben, nur ein und derselbe Speicherplatz benutzt wird, fehlt eine eindeutige Zuordnung zwischen dem Inhalt des Speicherplatzes und dem zu verkaufenden Artikel. Daher ist die bekannte Waage nicht geeignet, artikelspezifische Informationen, beispielsweise die mit einzelnen Artikeln erzielten Umsätze, festzuhalten, die die Geschäftsleitung zur Kontrolle des Warenbestandes und zu Buchhaltungsszwecken ausnutzen könnte.

Der Erfindung liegt die Aufgabe zugrunde, eine preisrechnende Waage der eingangs angegebenen Art so auszugestalten, daß sie bei verbesserter Bedienungsfreundlichkeit zusätzlich die Möglichkeit schafft, artikelspezifische Angaben jederzeit abrufbereit festzuhalten.

Erfindungsgemäß wird diese Aufgabe mit den Merkmalen des kennzeichnenden Teils des Patentanspruchs 1 gelöst.

In der erfindungsgemäßen Waage kann jeder Taste der ersten Tastengruppe des weiteren Tastenfeldes eine bestimmte Artikelkategorie (beispielsweise Fleisch, Käse, Obst u. dgl.) zugeordnet werden, so daß nach Drücken einer Taste der ersten Tastengruppe bereits festliegt, daß mit den Tasten der zweiten Gruppe nur noch Grundpreise aufgerufen werden, die zu Artikeln der bereits ausgewählten Artikelkategorie gehören. Die Möglichkeit der Vorauswahl von Artikelkategorien erleichtert der Bedienungsperson den Aufruf einzelner abgespeicherter Grundpreise ganz erheblich. Da in der erfindungsgemäßen Waage eine eindeutige Zuordnung zwischen dem gerade betroffenen Artikel und dem aufgerufenen Speicherplatz besteht, können an diesem Speicherplatz auch Angaben über die verkauften Artikel abgespeichert werden, die für die Geschäftsleitung für organisatorische und buchhalterische Zwecke von Interesse sind. Außerdem ist es möglich, an den den einzelnen Artikelkategorien zugeordneten Speicherplätzen Umsatzangaben abzuspeichern, die mit allen Artikeln dieser Artikelkategorie erzielt worden sind.

Die Weiterbildung des Anspruchs 2 gestattet eine Erfassung der Umsätze, die mit den Einzelartikeln der jeweiligen Kategorie erzielt worden sind. Auch die Summe der Gewichte der Einzelartikel läßt sich festhalten, wobei die zusätzlich zu den Grundpreisen abgespeicherten Informationen jederzeit abgerufen und von der Geschäftsleitung entsprechend ausgewertet werden können.

In der Ausgestaltung der Waage gemäß Anspruch 3 können in acht Artikelkategorien jeweils die Grundpreise zu zwanzig Einzelartikeln fest eingegeben werden, was bedeutet, daß insgesamt einhundertsechzig Grundpreise gespeichert werden können.

Die Erfindung wird nun anhand der Zeichnung beispielshalber erläutert. Es zeigen:

Fig. 1 ein schematisches Blockschaltbild der preisrechnenden Waage nach der Erfindung,

Fig. 2 eine schematische Darstellung zur Erläuterung des Aufbaus des Datenspeichers der Waage von Fig. 1 und

Fig. 3 eine Darstellung zur Erläuterung der an den einzelnen Speicherplätzen des Datenspeichers abspeicherbaren Angaben.

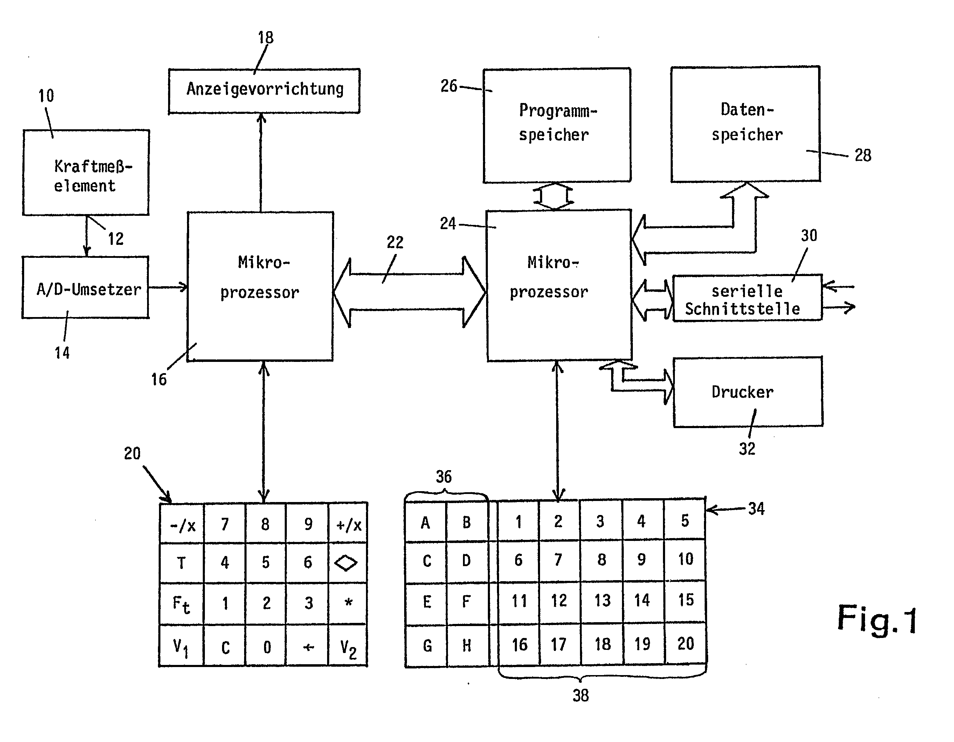

Das in Fig. 1 dargestellte Blockschaltbild der zu beschreibenden preisrechnenden Waage enthält nur die zur Erläuterung der Erfindung notwendigen Bausteine.

Die zu beschreibende Waage enthält zur Bestimmung des Gewichts eines zu wiegenden Artikels ein Kraftmeßelement 10, das fest mit einer nicht dargestellten Schale oder Platte zur Aufnahme des Artikels verbunden ist. Am Ausgang 12 gibt das Kraftmeßelement 10 ein elektrisches Signal ab, das dem jeweils festgestellten Gewicht entspricht. Mittels eines A/D-Umsetzers 14 wird dieses Signal in ein digitales Signal umgesetzt und einem ersten Mikroprozessor 16 zugeführt. Dieser Mikroprozessor 16 steuert entsprechend diesem digitalen Signal eine Anzeigevorrichtung 18 an, so daß diese das ermittelte Gewicht anzeigt. Der Mikroprozessor 16 ist auch mit einem Funktionstastenfeld 20 verbunden, mit dessen Tasten die jeweils gewünschten Funktion der Waage gesteuert werden können. Auf die einzelnen Tasten des Tastenfeldes 20 wird später noch näher eingegangen.

Der Mikroprozessor 16 steht über einen Bus 22 mit einem weiteren Mikroprozessor 24 in Verbindung, mit dem ein Programmspeicher 26, ein Datenspeicher 28, eine serielle Schnittstelle 30 und ein Drucker 32 in Verbindung stehen. Der Mikroprozessor 24 steht auch mit einem weiteren Tastenfeld 34 in Verbindung, dessen Bedeutung noch erläutert wird.

Zum besseren Verständnis der zu beschreibenden preisrechnenden Waage sei zunächst erläutert, wo derartige Waagen eingesetzt werden oder eingesetzt werden sollen. Preisrechnende Waagen haben die Eigenschaft, daß sie aus dem Gewicht des in ihre Waagschale gelegten Artikels den Preis des Artikels berechnen und anzeigen sowie gegebenenfalls auf einen Kassenzettel drucken. Voraussetzung dafür, daß der Preis ausgerechnet werden kann, ist, daß die Waage den Kilopreis des gerade gewogenen Artikels kennt. Solche Waagen bieten sich also besonders für die Verwendung in Geschäften oder Verkaufsstellen an, wo die Artikelpreise vom Artikelgewicht abhängen. Ein typischer Einsatzort ist eine Metzgerei, in der Fleisch- und Wurstwaren nach Gewicht verkauft werden. Auch in Supermärkten können solche preisrechnende Waagen eingesetzt werden, wo es mehrere Artikelkategorien gibt, die nach Gewicht verkauft werden, beispielsweise Fleisch- und Wurstwaren, Käse, Obst u.dgl. Daß die zu beschreibende Waage in einer allen gestellten Anforderungen gerecht werdenden Weise eingesetzt werden kann, zeigt die nachfolgende Beschreibung.

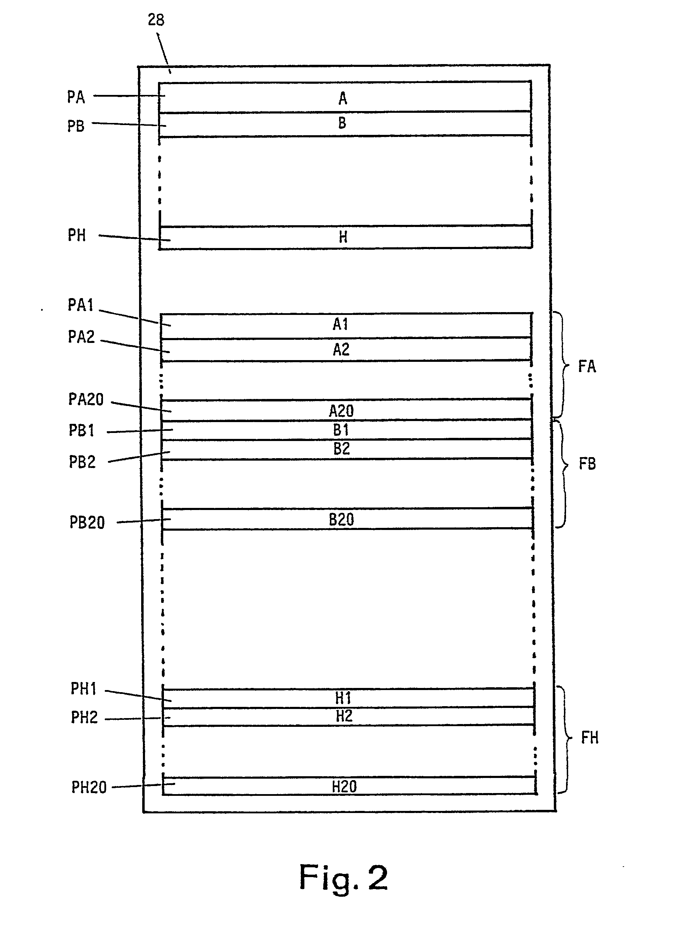

In der zu beschreibenden Waage ist der Datenspeicher 28 in besonderer Weise strukturiert, und es liegt eine besondere Zuordnung zwischen den Tasten des Tastenfeldes 34 und Speicherplätzen sowie Speicherfeldern im Datenspeicher 28 vor. Aus Fig. 1 ist zunächst zu erkennen, daß das Tastenfeld 34 zwei Tastengruppen enthält, nämlich eine Tastengruppe 36 mit den Tasten "A" bis "H" sowie eine Tastengruppe 38 mit den Tasten "1" bis "20". Der Datenspeicher 28 enthält für jede Taste des Tastenfeldes 36 einen Speicherplatz, gemäß Fig. 2 also die Speicherplätze PA bis PH. Durch Drücken der "A"-Taste der Tastengruppe 36 wird beispielsweise der Speicherplatz PA aufgerufen, so daß durch eine entsprechende Betätigung von Funktionstasten im Tastenfeld 20 Daten aus dem Speicherplatz PA mittels des Druckers 32 ausgedruckt oder Daten in den Speicherplatz PA geschrieben werden können.

Ferner enthält der Datenspeicher 28 für jede Taste der Tastengruppe 38 ein Speicherfeld, das aus zwanzig einzelnen Speicherplätzen zusammengesetzt ist. In Fig. 2 sind diese Speicherfelder FA, FB ... FH mit den jeweils in ihnen enthaltenen Speicherplätzen PA1 bis PA20, PB1 bis PB20 ... PH1 bis PH20 schematisch dargestellt. Zum Adressieren eines Speicherplatzes in einem Speicherfeld muß das Speicherfeld zunächst durch Drücken einer Taste in der Tastengruppe 36 ausgewählt werden, worauf dann der Speicherplatz durch Drücken einer Taste in der Tastengruppe 38 adressiert werden kann. In Fig. 2 sind bei den Speicherplätzen die zu ihrer Adressierung zu drückenden Tasten angegeben. Wenn beispielsweise der Speicherplatz B2 im Speicherfeld FB adressiert werden soll, müssen nacheinander die "B"-Taste und die "2"-Taste im Tastenfeld 34 gedrückt werden. Sobald ein Speicherplatz in einem der Speicherfelder adressiert worden ist, können unter Zuhilfenahme des Funktionstastenfeldes 20 Daten in diesen Speicherplatz eingegeben oder bereits darin enthaltende Daten verändert oder auch mittels des Druckers 32 ausgedruckt werden.

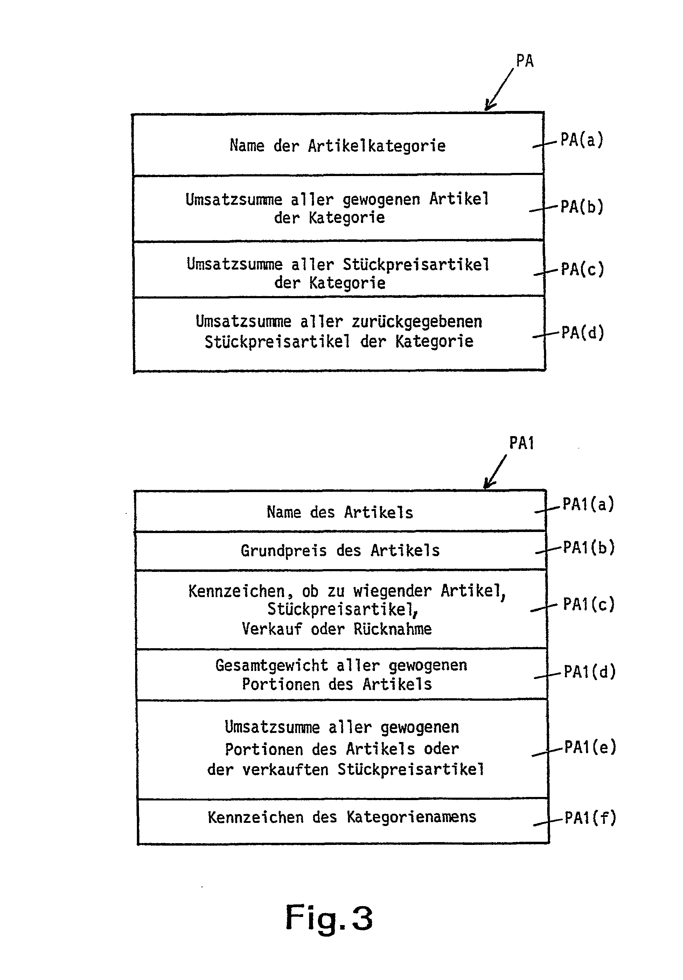

Anhand einer Beschreibung von Daten, die an den einzelnen Speicherplätzen im Datenspeicher 28 abgespeichert werden können, lassen sich die verschiedenen Anwendungsmöglichkeiten der zu beschreibenden Waage anschaulich aufzeigen. In Fig. 3 sind die Speicherplätze PA und PA1 schematisch dargestellt, wobei in Abschnitten PA(a) bis PA(d) bzw. PA1(a) bis PA1(f) jeweils angegeben ist, welche Art von Daten und Informationen in den Speicherplätzen enthalten sind.

Der Speicherplatz PA enthält im Abschnitt PA(a) den Namen einer Artikelkategorie, also beispielsweise die Angabe "Fleisch", "Käse" o.dgl. Der Abschnitt PA1(a) des Speicherplatzes PA1 enthält den Namen eines Artikels aus der Artikelgruppe, deren Namen im Abschnitt PA(a) des Speicherplatzes PA abgespeichert ist. Bei der Artikelkategorie "Fleisch" ist beispielsweise im Abschnitt PA1(a) die Angabe "Rinderfilet" abgespeichert. Im Abschnitt PA1(b) des Speicherplatzes PA1 ist der Grundpreis des betreffenden Artikels, beispielsweise also der Kilopreis von Rinderfilet, abgespeichert.

Mit den bisher bechriebenen Angaben in den Speicherplätzen PA und PA1 könnte die Waage bereits als preisrechnende Waage eingesetzt werden. Die Bedienungsperson muß, nachdem sie ein Stück Rinderfilet auf die mit dem Kraftmeßelement 10 verbundene Schale oder Platte gelegt hat, die "A"-Taste der Tastengruppe 36 für die Adressierung des Speicherplatzes PA sowie für die Auswahl des Speicherfeldes FA und dann die "1"-Taste der Tastengruppe 38 für die Adressierung des Speicherplatzes PA1 drücken. Das Drücken der Tasten wird vom Mikroprozessor 24 erkannt, der dann die eigentliche Adressierung des Datenspeichers 28 vornimmt, worauf in Zusammenwirkung mit dem Mikroprozessor 16 der Wägevorgang, die Berech-

nung des Preises der Rinderfilet-Portion und die Anzeige des berechneten Preises in der Anzeigevorrichtung 18 vorgenommen werden. Das Drücken der"*"-Taste im Tastenfeld 20 bewirkt das Ausdrucken des Preises auf einen Kassenzettel im Drucker 32.

Aufgrund der besonderen Struktur des Datenspeichers und der Zuordnung der Speicherplätze und Speicherfelder zu den Tasten des Tastenfeldes 34 werden die Einsatzmöglichkeiten der beschriebenen Waage beträchtlich erweitert, wenn an den einzelnen Speicherplätzen weitere Informationen über die Artikelkategorien und über die einzelnen Artikel abgespeichert werden. Fig. 3 zeigt am Beispiel des Speicherplatzes PA, daß in einem Abschnitt PA(b) die Umsatzsumme aller gewogenen Artikel der Kategorie abgespeichert werden kann. Durch das im Programmspeicher 26 festgelegte Programm kann bestimmt werden, daß jedesmal dann, wenn ein Artikel einer Kategorie gewogen worden ist und der entsprechende Preis berechnet worden ist, gleichzeitig mit dem Auslösen des Druckvorgangs im Drucker 32 der berechnete Preis in den als Summenspeicher wirkenden Abschnitt PA(b) des Speicherplatzes PA eingegeben wird. Auf diese Weise wird jederzeit festgehalten, welcher Umsatz mit allen Artikeln der der "A"-Taste zugeordneten Artikelkategorie erzielt worden ist. Diese Umsatzsumme kann beispielsweise täglich, wöchentlich oder auch monatlich abgerufen werden und zur Kontrolle des Lagerbestandes und auch zu buchhalterischen Zwecken ausgewertet werden. Im oben geschilderten konkreten Beispiel der Artikelkategorie Fleisch kann somit jederzeit festgestellt werden, welcher Umsatz mit Fleisch erzielt worden ist. Durch Vorsehen eines weiteren, in Fig. 3 nicht dargestellten Abschnitts des Speicherplatzes PA könnte auch festgehalten werden, wieviel Kilogramm Fleisch insgesamt verkauft worden sind.

Da nicht nur die erzielte Umsatzsumme einer Artikelkategorie, sondern auch die Umsatzsumme der gewogenen einzelnen Artikel der Kategorie von Interesse ist, wird auch die Möglichkeit vorgesehen, die Umsatzsumme aller gewogenen Portionen eines Artikels zu speichern. Am Beispiel des Speicherplatzes PA1 wird dies durch Vorsehen des Abschnitts PA1(e) ermöglicht. Auch das Gesamtgewicht aller gewogenen Portionen des betreffenden Artikels kann im Abschnitt PA1(d) des Speicherplatzes PA1 festgehalten werden. Mit diesen Informationen in den Speicherplätzen PA und PA1 kann jederzeit mittels des Druckers 32 eine genaue Aufstellung darüber erhalten werden, wie hoch der mit einer Artikelkategorie (wie angenommen mit Fleisch) erzielte Umsatz war und welche Umsätze mit den einzelnen Artikeln (beispielsweise mit Rinderfilet) der betreffenden Kategorie erzielt worden sind. Auch die Gewichtsangaben für die Artikelgruppe und für die einzelnen Artikel der Kategorie können abgerufen werden. Zum besseren Verständnis des vom Drucker 32 erzeugten Ausdrucks kann in einem eigenen Abschnitt eines einer Taste in der Tastengruppe 38 zugeordneten Speicherplatzes ein Kennzeichen für den Namen der Artikelkategorie abgespeichert sein, zu der das betreffende Speicherfeld gehört.

Im Fall von Fig. 3 ist dieses Kennzeichen im Abschnitt PA1(f) des Speicherplatzes PA1 enthalten. Wenn also beispielshalber Rinderfilet gewogen worden ist, erscheint auf dem vom Drucker 32 erzeugten Ausdruck neben dem Preis beispielsweise auch die Angabe "Fleisch".

Da die beschriebene Waage mit einem Drucker ausgestattet ist und ein Funktionstastenfeld aufweist, mit dessen Hilfe über dieses Tastenfeld eingegebene Informationen ausgedruckt werden können, kann die Waage auch in ähnlicher Weise wie eine Registrierkasse eingesetzt werden. Über die Tasten "0" bis "9" kann der Preis eines Artikels direkt eingegeben werden, worauf das Ausdrucken des eingegebenen Preises mittels des Druckers 32 durch Betätigen der "*"-Taste ausgelöst wird. Die "C"-Taste dient der Löschung eines fehlerhaft eingegebenen Preises. Die "V$_1$"-Taste und die "V$_2$"-Taste dienen der Kennzeichnung von zwei Verkäufern, so daß jederzeit festgestellt werden kann, zu welcher Zeit welche von zwei Verkäuferinnen die Waage bedient hat. Die "T"-Taste wird gedrückt, wenn ein Verpackungsgewicht in Abzug gebracht werden soll. Die "F$_t$"-Taste ist eine Festtaste, die gedrückt wird, wenn über einen längeren Zeitraum hinweg immer der gleiche zuvor eingegebene Grundpreis zur Anwendung kommen soll. Die "◊"-Taste bewirkt das Ausdrucken einer Teilsumme, und die "*"-Taste bewirkt das Ausdrucken einer Gesamtsumme. Die "-/x"- und "+/x"-Tasten ermöglichen die Anwendung der Waage als Registrierkasse; ihre Bedeutung und Wirkung werden anschließend noch näher erläutert.

In einem Supermarkt werden neben zu wiegenden Artikeln häufig auch Artikel verkauft, die unabhängig vom Gewicht einen festen Preis haben. Bei diesem Artikel kann es sich beispielsweise um eine der Artikelkategorie Obst zugehörige Melone handeln oder auch um Getränke, die flaschenweise verkauft und unter Anwendung eines Stückpreises in Rechnung gestellt werden. Die besondere Struktur des Datenspeichers und die Verwendung des Tastenfeldes 34 ermöglichen es, in den vom Drucker 32 erstellten Kassenzettel auch Artikelpreise aufzunehmen, die für Artikel gelten, die stückweise in Rechnung gestellt werden. Beispielsweise kann der "G"-Taste in der Tastengruppe 36 die Artikelgruppe "Getränke" zugeordnet werden. Da Getränke typische Artikel sind, die stückweise berechnet werden, enthalten die Speicherplätze PG1 bis PG20 in dem der "G"-Taste zugeordneten Speicherfeld FG jeweils ein Kennzeichen dafür, daß der betreffende Artikel ein nicht zu wiegender, sondern ein nach Stückpreis zu be. rechnender Artikel ist. Als Grundpreise sind dann jeweils die Stückpreise der betreffenden Getränke abgespeichert.

Gerade bei Getränken kommt es häufig vor, daß Flaschen zurückgegeben werden und daß Flaschenpfand erstattet wird. Dies bedeutet aber, daß der als Flaschenpfand angesetzte Betrag gutgeschrieben werden muß. Demgemäß enthält der jeweilige Speicherplatz auch eine Angabe darüber, ob der Artikelstückpreis in Rechnung gestellt oder aber gutgeschrieben werden soll.

Wenn beispielsweise der Kauf von zehn Flaschen Zitronenlimonade betrachtet wird, dann muß die Verkäuferin folgende Schritte durchführen: Sie drückt zunächst die "G"-Taste in der Tastengruppe 36, was die Auswahl des Speicherfeldes FG bewirkt, in dessen Speicherplätze Angaben über die zu verkaufenden Getränke abgespeichert sind. Anschließend drückt sie die dem Artikel "Zitronenlimonde" zugeordnete Taste in der Tastengruppe 38, beispielsweise die "7"-Taste. Im Abschnitt PG7(c) des Speicherplatzes PG7 ist ein Kennzeichen abgespeichert, das angibt, daß der Artikel unter Anwendung eines Stückpreises berechnet wird und daß der Artikel verkauft werden soll. Aus dem Vorhandensein des Kennzeichens für Stückpreisartikel erkennen die Mikroprozessoren 16 und 24, daß die Wägefunktion außer Kraft gesetzt ist, was bedeutet, daß der Mikroprozessor 16 nicht auf Signale aus dem A/D-Umsetzer 14 reagiert. Die Verkäuferin gibt anschließend unter Verwendung der Zahlentasten im Funktionstastenfeld 20 die Zahl "10" ein, die die Zahl der zu verkaufenden Flaschen angibt. Dann drückt sie die "+/x"-Taste, die die Multiplikationsfunktion und das Ausdrucken des berechneten Ergebnisses am Drucker 32 auslöst. Hat der Käufer plötzlich festgestellt, daß er eigentlich nur 8 Flaschen kaufen wollte, dann kann die Rückgabe durch Drücken der "G"-Taste in der Tastengruppe 36, der "7"-Taste in der Tastengruppe 38, der "2"-Taste im Funktionstastenfeld 20 und durch Drücken der "-/x"-Taste berücksichtigt werden. Durch Betätigen dieser Tasten wird der Stückpreis einer Zitronenlimonadenflasche zweimal in Abzug gebracht.

Der Käufer bringt unter Umständen auch Flaschen zurück, für die ihm jeweils ein Flaschenpfand erstattet wird. Die Verkäuferin berücksichtigt dies dadurch, daß sie zunächst wieder die "G"-Taste drückt, die die Artikelkategorie "Getränke" auswählt. Anschließend drückt sie in der Tastengruppe 38 diejenige Taste, der der das Flaschenpfand kennzeichnende Speicherplatz zugeordnet ist. Der Speicherplatz enthält dabei auch ein Kennzeichen, daß es sich nicht um einen zu verkaufenden Artikel, sondern um eine Rücknahme, demgemäß um einen zu erstattenden Betrag handelt. Die Anzahl der zu erstattenden Pfandbeträge wird mit Hilfe der Zahlentasten im Funktionstastenfeld 20 eingegeben, und die Multiplikation sowie das Ausdrucken des zu erstattenden Betrags werden nach Betätigen der "+/x"-Taste bewirkt.

Die übrige Beschreibung zeigt, daß die Waage mit hohem Bedienungskomfort und auch mit hoher Bedienungssicherheit sehr vielseitig eingesetzt werden kann. Insbesondere zusätzlich zu ihrer Funktion als preisrechnende Waage auch noch Registrierkassenfunktionen ausüben, weil in dem Speicher nicht nur einfach aufrufbare Grundpreise für zu wiegende Artikel, sondern auch ebenso einfach aufrufbare Preise für stückweise in Rechnung zu stellende Artikel abgespeichert werden können. Aufgrund der beschriebenen Struktur des Datenspeichers 28 können jederzeit für die Geschäftsleitung wichtige Informationen über erzielte Umsätze und verkaufte Mengen abgerufen werden. Über die in der Waage vorgesehene serielle Schnittstelle 30 ist es sogar möglich, diese speziellen Informationen zu einer Zentrale zu über tragen, so daß von einem Ort aus ein Abruf der Informationen aus den Datenspeichern einer größeren Anzahl von Waagen möglich ist.

## Patentansprüche

1. Preisrechnende Waage, die artikelbezogene Umsatzangaben speichern und auf Abruf abgeben kann, mit einem Speicher zum Speichern von Grundpreisen für zu verkaufende Artikel, einem Funktionstastenfeld mit Tasten zum Steuern von Grundpreisen für zu verkaufende Artikel, einem Funktionstastenfeld mit Tasten zum Steuern der Waagefunktion, einem aus einer ersten und einer zweiten Tastengruppe bestehenden weiteren Tastenfeld mit Tasten zum Aufrufen von die Grundpreise enthaltenden Speicherplätzen in dem Speicher und einer Rechenanordnung, die aus dem mittels des Tastenfeldes aufgerufenen Grundpreis und dem Gewicht des Artikels dessen Preis berechnet, dadurch gekennzeichnet, daß der Speicher (28) für jede Taste der ersten Tastengruppe (36) einen durch Betätigen der jeweiligen Taste adressierbaren Speicherplatz (PA–PH) zum Speichern von Informationen über jeweils eine Kategorie zusammengehöriger Artikel sowie ein durch Betätigen der jeweiligen Taste auswählbares, der einen Kategorie zusammengehöriger Artikel zugeordnetes Speicherfeld (FA–FH) mit mehreren Speicherplätzen (PA1–PA20, PB1–PB20, ... PH1–PH20) enthält, daß jedes Speicherfeld (FA–FH) für jede Taste der zweiten Tastengruppe (38) einen Speicherplatz (PA1–PA20, PB1–PB20) ..., PH1–PH20) zum Speichern eines Grundpreises und von Informationen über den zu diesem Grundpreis gehörigen Artikel enthält, wobei ein Speicherplatz (PA1–PA20, PB1–PB20, ... PH1–PH20) in einem durch Betätigen einer Taste der ersten Tastengruppe (36) ausgewählten Speicherfeld (FA–FH) durch Betätigen einer Taste der zweiten Tastengruppe (38) adressierbar ist, und daß jeder den Tasten der ersten Tastengruppe (34) zugeordnete Speicherplatz (PA–PH) mehrere Abschnitte (PA(a)–PA(d), PB(a)–PB(d), ... PH(a)–PH(d)) zum Speichern des Namens und von Umsatzangaben der Kategorie zusammengehöriger Artikel enthält.

2. Preisrechnende Waage nach Anspruch 1, dadurch gekennzeichnet, daß jeder Speicherplatz (PA1–PA20, PB1–PB20, ... PH1–PH20) eines Speicherfeldes (FA–FH) mehrere Abschnitte (PA1(a)–PA1(f), ... PA20(a)–PA20(f), PB1(a)–PB1(f), ... PB20(a)–PB20(f), ... PH1(a)–PH20(f), ... PH20(a)–PH20(f)) aufweist, in denen zusätzlich zum Grundpreis des Artikels der Artikelname, der Artikelumsatz und die Summe der ermittelten Gewichte der gewogenen Portionen des Artikels abspeicherbar sind.

3. Preisrechende Waage nach Anspruch 1 und 2, dadurch gekennzeichnet, daß die erste Tastengruppe (34) acht Tasten enthält und daß die zweite Tastengruppe (38) zwanzig Tasten enthält.

## Claims

1. Price-calculating scales capable of storing article-related turnover information and supplying the same when the respective article is called up, having a memory for storing basic prices for articles to be sold, a function key panel with keys for controlling the weighing function, a further key panel including a first and a second group of keys with keys for calling up memory locations in the memory which contain the basic prices and a computing means which calculates from the basic price called up by means of the key panel and the weight of the article the price thereof, characterized in that the memory (28) for each key of the first key group (36) includes a memory location (PA–PH) addressable by actuating the respective key for storing information on in each case one category of associated articles and a memory area (FA–FH) which comprises a plurality of memory locations (PA1–PA20, PB1–PB20, ... PH1–PH20), that each memory location (FA–FH) for each key of the second key group (38) includes a memory location (PA1–PA20, PB1–PB20, ... PH1–PH20) for storing a basic price and information on the article belonging to said basic price, a memory location (PA1–PA20, PB1–PB20, ... PH1–PH20) in a memory area (FA–FH) selected by actuating a key of the first key group (36) being addressable by actuating a key of the second key group (38), and that each memory location (PA–PH) allocated to the keys of the first key group (34) includes a plurality of sections (PA(a)–PA(d), PB(a)–PB(d), ... PH(a)–PH(d) for storing the name and turnover information on the articles belonging to the category.

2. Price-calculating scales according to claim 1, characterized in that each memory location (PA1–PA20, PB1–PB20, ... PH1–PH20) of a memory area (FA–FH) comprises a plurality of sections (PA1(a)–PA1(f), ... PA20(a)–PA20(f), PB1(a)–PB1(f), ... PB20(a)–PB20(f), ... PH1(a)–PH20(f), ... PH20(a)–PH20(f) in which in addition to the basic price of the article the article name, the article turnover and the sum of the weights determined of the weighed portions of the article can be stored.

3. Price-calculating scales according to claims 1 and 2, characterized in that the first key group (34) includes eight keys and the second key group (38) includes twenty keys.

## Revendications

1. Balance calculant les prix, qui peut mémoriser et délivrer sur appel des indications de vente concernant des articles, comportant une mémoire pour la mémorisation des prix de base d'articles à vendre, un clavier de touches de fonction comportant des touches de commande du fonctionnement de la balance, un autre clavier formé d'un premier et d'un second groupe de touches, avec des touches pour appeler dans la mémoire des positions de mémoire contenant les prix de base et un dispositif de calcul qui calcule, à partir du prix de base, appelé au moyen du clavier, et du poids de l'article, le prix de cet article, caractérisée en ce que la mémoire (28) contient, pour chaque touche du premier groupe de touches (36), une zone de mémoire (PA–PH), adressable par manœuvre de la touche correspondante, pour la mémorisation d'informations sur chacun des articles d'une même catégorie ainsi qu'une zone de mémoire (FA–FH) à plusieurs positions de mémoire (PA1–PA20, PB1–PB20, ... PH1–PH20), pouvant être sélectionnée par manœuvre de la touche correspondante, et affectée aux articles d'une même catégorie, en ce que chaque zone de mémoire (FA–FH) pour chaque touche du second groupe (38) de touches contient une position de mémoire (PA1–PA20, PB1–PB20, ... PH1–PH20) pour la mémorisation d'un prix de base et d'informations sur l'article associé à ce prix de base, une position de mémoire (PA1–PA20, PB1–PB20, ... PH1–PH20), dans une zone de mémoire (FA–FH) qui peut être sélectionnée par manœuvre d'une touche du premier groupe (36) de touches, étant adressable par une manœuvre d'une touche du second groupe (38) de touches, et en ce que chacune des zones de mémoire (PA–PH) affectées aux touches du premier groupe (34) de touches contient plusieurs sections (PA(a)–PA(d), PB(a)–PB(d), ... PH(a)–PH(d) pour la mémorisation du nom et des indications de vente des articles de la même catégorie.

2. Balance calculant les prix selon la revendication 1, caractérisée en ce que chaque position de mémoire (PA1–PA20, PB1–PB20, ... PH1–PH20) d'une zone de mémoire (FA–FH) présente plusieurs sections (PA1(a)–PA1(f), ... PA20(a)–PA20(f), PB1(a)–PB1(f), ... PB20(a)–PB20(f), ... PH1(a)–PH20(f), ... PH20(a)–PH20(f)) dans lesquelles, en plus du prix de base de l'article, peuvent être mémorisés le nom de l'article, la rotation des articles et la somme des poids déterminés des portions pesées de l'article.

3. Balance calculant les prix selon les revendications 1 et 2, caractérisée en ce que le premier groupe (34) de touches contient huit touches et le second groupe (38) de touches contient vingt touches.

EP 0 235 335 B1

18

Anzeigevorrichtung

10

26

Programmspeicher

Datenspeicher

28

Kraftmeßelement

12

22

24

30

A/D-Umsetzer

Mikroprozessor

Mikroprozessor

serielle
Schnittstelle

14

16

Drucker

32

20

| -/x | 7 | 8 | 9 | +/x |
|---|---|---|---|---|
| T | 4 | 5 | 6 | ◇ |
| $F_t$ | 1 | 2 | 3 | * |
| $V_1$ | C | 0 | ← | $V_2$ |

36

34

| A | B | 1 | 2 | 3 | 4 | 5 |
|---|---|---|---|---|---|---|
| C | D | 6 | 7 | 8 | 9 | 10 |
| E | F | 11 | 12 | 13 | 14 | 15 |
| G | H | 16 | 17 | 18 | 19 | 20 |

38

Fig.1

Fig. 2

PA

| |
|---|
| Name der Artikelkategorie — PA(a) |
| Umsatzsumme aller gewogenen Artikel der Kategorie — PA(b) |
| Umsatzsumme aller Stückpreisartikel der Kategorie — PA(c) |
| Umsatzsumme aller zurückgegebenen Stückpreisartikel der Kategorie — PA(d) |

PA1

| |
|---|
| Name des Artikels — PA1(a) |
| Grundpreis des Artikels — PA1(b) |
| Kennzeichen, ob zu wiegender Artikel, Stückpreisartikel, Verkauf oder Rücknahme — PA1(c) |
| Gesamtgewicht aller gewogenen Portionen des Artikels — PA1(d) |
| Umsatzsumme aller gewogenen Portionen des Artikels oder der verkauften Stückpreisartikel — PA1(e) |
| Kennzeichen des Kategorienamens — PA1(f) |

# Fig.3